**Europäisches Patentamt**

**European Patent Office**

**Office européen des brevets**

(11) Veröffentlichungsnummer: **0 216 950**
**B1**

(12) **EUROPÄISCHE PATENTSCHRIFT**

(45) Veröffentlichungstag der Patentschrift:
**15.02.89**

(21) Anmeldenummer: **85112552.6**

(22) Anmeldetag: **03.10.85**

(51) Int. Cl.⁴: **B65G 9/00**

(54) Trageinrichtung für ein Hängetransportsystem.

(43) Veröffentlichungstag der Anmeldung:
**08.04.87 Patentblatt 87/15**

(45) Bekanntmachung des Hinweises auf die Patenterteilung:
**15.02.89 Patentblatt 89/7**

(84) Benannte Vertragsstaaten:
**AT CH DE FR GB IT LI**

(56) Entgegenhaltungen:
**CH-A- 590 167**
**US-A- 2 957 590**
**US-A- 3 235 059**
**US-A- 4 003 315**

(73) Patentinhaber: **VEIT TRANSPO GMBH,**
**Rudolf-Diesel-Strasse 3, D-8910 Landsberg/Lech(DE)**

(72) Erfinder: **Schönenberger, Rolf, Dipl.-Ing.**
**Dipl.-Wirtsch.Ing., Herzogstandstrasse 7,**
**D-8910 Landsberg Lech(DE)**
Erfinder: **Robu, Johann, Dachauer Strasse 12,**
**D-8037 Olching(DE)**
Erfinder: **Kunze, Walter, Tauentzienstrasse 47,**
**D-8900 Augsburg(DE)**
Erfinder: **Bergmeier, Werner, Dipl.-Ing., Meggendorfer**
**Strasse 22, D-8000 München 50(DE)**

(74) Vertreter: **Patentanwälte Grünecker, Kinkeldey,**
**Stockmair & Partner, Maximilianstrasse 58,**
**D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Trageinrichtung für ein Hängetransportsystem, entsprechend dem Oberbegriff des Anspruchs 1.

Aus der US-PS 2 957 590 ist eine solche Trageinrichtung bekannt, bei der die Stangen als U-förmige Gabeln ausgebildet sind, die mit ihrem U-Steg an hakenförmigen Konsolen gelagert sind, die ihrerseits am zweiten Arm mittels Klemmschrauben festgeklemmt sind. Diese Art der Stangenhalterung ist aufwendig und das Abnehmen und Verstellen der Stangen zeitaufwendig.

Der Erfindung liegt die Aufgabe zugrunde, eine Trageinrichtung der oben definierten Art baulich und in der Handhabung zu vereinfachen.

Diese Aufgabe wird durch die Merkmale des Patentanspruchs 1 gelöst.

Die Lagerung in einer Bohrung bietet dem tragenden Stangenende eine gute Unterstützung und erleichtert die Verriegelung, wobei die Konstruktion insgesamt einfach ist. Ein wesentlicher Vorteil ist die Bewegungsrichtung der Stange beim Einsetzen bzw. Abziehen relativ zum zweiten Arm des Trägers im Hinblick auf die Arbeitsstellung der eingesetzten Stangen. Jede Stange wird bei ihrer Mitnahme aus dem Tragbereich der übrigen Stangen herausgezogen und zwar auf die stangenfreie Seite des Trägers hin. Dieser Bereich ist für eine Bedienungsperson und insgesamt zum Hantieren mit der Stange frei, während andernfalls zwischen gegebenenfalls noch beladene Stangen hineingegriffen werden müßte. Die Stange wird während der gesamten Entnahmebewegung durch die Bohrung geführt und unterstützt, so daß sie sich nur in dem Bereich bewegt, den sie vorher eingenommen hat. Etwa am Träger noch vorhandenes Fördergut kann also nicht durch unkontrollierte Stangenbewegungen beschädigt werden oder diese Bewegung behindern.

Eine die vorstehend genannten Vorteile weiterbildende Gestaltung ist durch den Anspruch 2 angesprochen. Sie ermöglicht den Transport und gegebenenfalls auch die Lagerung von Ballenmaterial mit axialen Einsatzbereichen an beiden Seiten oder einem durchgehenden Hohlraum in Achsrichtung. Es ist lediglich notwendig, den Ballen zwischen die beiden Träger zu bringen, dann kann von jeder Seite eine Stange in entsprechender Höhe durch den zweiten Arm und anschließend in den Ballen eingeführt und am Träger verriegelt werden. Je nach Durchmesser der Rollen oder Ballen können mehrere übereinander an einem Trägerpaar gehalten werden. Die vorstehend geschilderte Bewegungsrichtung jeder Stange beim Ansetzen bzw. Abziehen erlaubt es dabei, daß jeder einzelne Ballen einzeln entfernt bzw. eingesetzt werden kann, unabhängig davon, wieviel andere Ballen über oder unter ihm gehalten sind.

Bei einer vorteilhaften Weiterentwicklung, die durch das Merkmal des Anspruchs 3 gekennzeichnet ist, brauchen im Augenblick nicht tragende Stangen nicht unbedingt vom Träger entfernt zu werden. Dies ist insbesondere vorteilhaft, wenn der Träger mit Stangen möglichst platzsparend in einer Warteposition aufbewahrt werden soll. Aber auch beim Weg eines Trägers innerhalb der Fördereinrichtung zwischen verschiedenen Lager- und/oder Arbeitsplätzen, wobei sich Art und Menge des Fördergutes häufig ändern, ist es vorteilhaft, wenn die Stangen nicht entnommen und aufbewahrt werden müssen, sondern seitlich am Träger hängend mitgenommen werden können. Sie sind dann jederzeit verfügbar, wenn sich Ladung für sie ergibt. Außerdem sammeln sich nicht herausgenommene Stangen an Plätzen an, von denen sie dann eigens abgeholt und zu anderen Einsatzstellen gebracht werden müßten.

Eine einfache Verriegelungsmöglichkeit wird durch das Merkmal des Anspruchs 4 gekennzeichnet. Ein Ansatz dieser Art ist auf einfachste Weise durch Biegen eines Stangenendes herzustellen. Die Handhabung beim Feststellen und beim Lösen ist denkbar einfach. Es werden keine losen Einzelteile benötigt, die bei häufigem Wechsel der Stangenanordnung verlorengehen oder sich abnützen könnten.

Die Merkmale der Ansprüche 5 bis 7 betreffen Verbesserungen, die die Handhabung weiter vereinfacht, insbesondere beim Abnehmen der Stange.

Die Anordnung des Ansatzes und des Zwischenstückes zueinander, insbesondere jedoch auch der Durchmesser dieses Stangenbereiches, erlauben auf einfache Weise die Bewegung der Stange in eine am Arm gehaltene Ruhestellung. Das Zwischenstück ist, unter Verschwenken der Stange, soweit in die Bohrung einführbar, daß es als Lagerung für die etwa senkrecht dazu hängende Stange dient. Die Stange ist in dieser Stellung zwar nicht festgestellt, die Abwinkelungen, insbesondere der Ansatz für die Verriegelung, verhindern jedoch, daß sie aus der Bohrung herausgelangen kann.

Die Belastbarkeit der Trageinrichtung mit Fördergut unterschiedlichster Art wird durch die Merkmale der Ansprüche 9 bis 11 weiterhin verbessert. Durch die Verschiebung der Aufhängestelle am ersten Arm des Trägers ändert sich das Verhältnis zwischen dieser Aufhängestelle und seinem durch die Last mitbestimmten Schwerpunkt und damit der Winkel des zweiten Arms zur Vertikalen. Die für die jeweilige Belastung günstigste, d.h. sicherste, Ausrichtung des zweiten Armes und damit der Stangen ist auf einfache Weise zu realisieren.

Weitere Einzelheiten der erfindungsgemäßen Trageinrichtung und die damit erzielbaren Vorteile gehen aus der Beschreibung eines Ausführungsbeispieles hervor. Es zeigen:

Fig. 1 einen Träger,
Fig. 2 ein vergrößertes Detail,
Fig. 3 eine Anwendungsform der Trageinrichtung, und
Fig. 4 eine weitere Anwendungsform der Trageinrichtung.

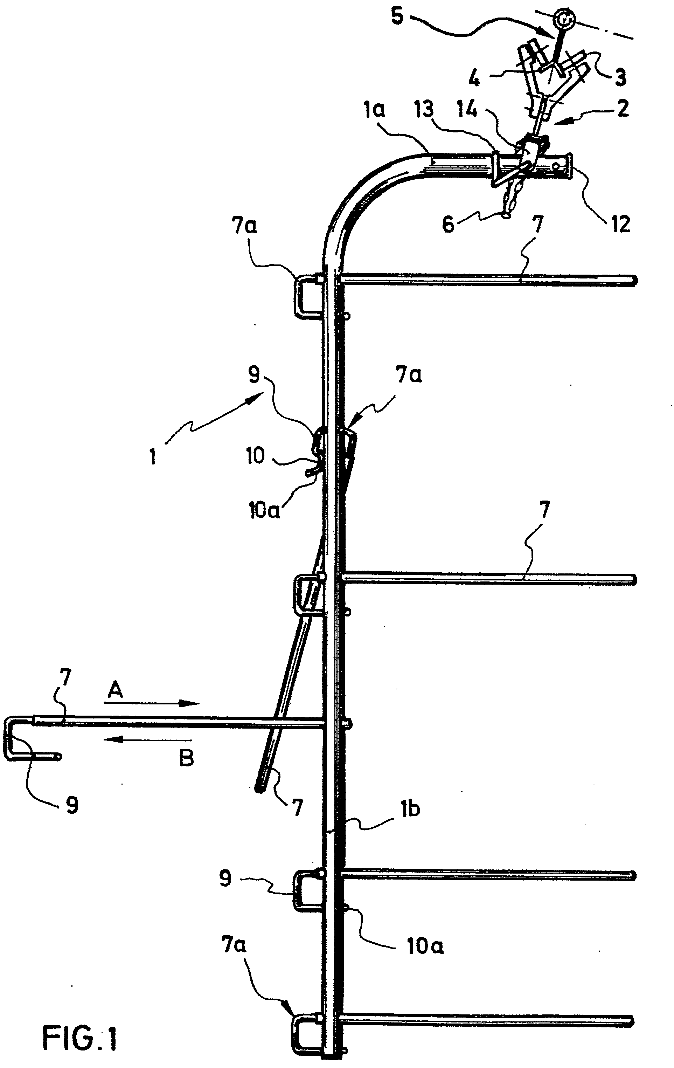

Die in Fig. 1 dargestellte Trageinrichtung besteht im wesentlichen aus einem winkelförmigen Träger 1 mit einem kurzen ersten Arm 1a und einem dazu etwa senkrechten, langen Arm 1b. Der Übergang zwischen beiden Armen verläuft bogenförmig. Am Arm 1a ist im Abstand zu dessen freiem Ende ein als Ganzes mit 2 bezeichneter Tragbügel gehaltert. Er stützt sich mittels Rollen 3 auf einer im Durchschnitt etwa V-förmigen Schiene 4 eines als Ganzes mit 5 bezeichneten Schienensystems ab. Mittels des Tragbügels 2 ist der Träger auf dem Schienensystem 5 verfahrbar, von Hand oder gegebenenfalls angetrieben. Eine Verbindungskette 6 ist im Bereich des Tragbügels befestigt. Sie dient zum Koppeln mit einem weiteren Träger, wenn aus zwei oder mehr Trägern gemeinsam verfahrbare Züge gebildet werden.

Der zweite Arm 1b des Tragbügels ist bei aufgehängtem Tragbügel im wesentlichen von oben nach unten gerichtet, an ihm sind sechs Stangen 7 gehaltert. Für jede Stange 7 ist eine Bohrung 8 vorgesehen. Wie die verschiedenen Stangenstellungen in Fig. 1 zeigen, ist jede Stange in eine Bohrung einführbar – Pfeil A – und aus ihr wieder abziehbar – Pfeil B. Die eingeschobene Stange ist auf später noch näher zu erläuternde Weise in einer zum Arm 1b etwa senkrechten Stellung an ihm verriegelbar. Außerdem ist jede Stange 7 am Träger in eine Ruhestellung bringbar, wie sie die zweite Stange von oben in Fig. 1 zeigt. In dieser Stellung hängt die Stange 7 am Arm 1b etwa mit ihm gleichgerichtet nach unten.

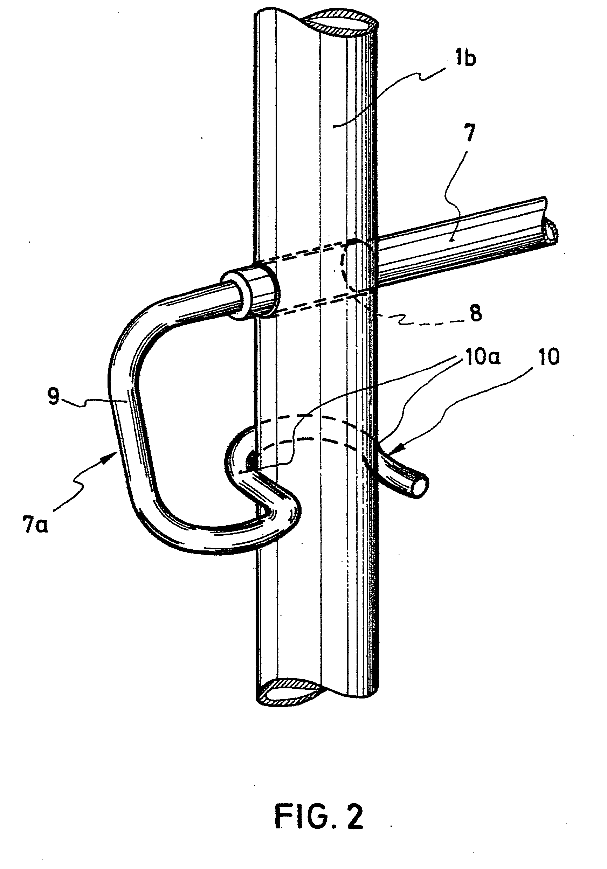

Jede Stange 7 weist einen zur Halterung am Träger 1 ausgebildeten Endbereich 7a auf, dessen Durchmesser kleiner als der der übrigen geraden Stange 7 ist. Ein solcher Endbereich ist in Fig. 2 vergrößert dargestellt, zusammen mit einem Abschnitt des zweiten Trägerarms 1b. Der Endbereich 7a umfaßt ein bogenförmiges Zwischenstück 9, das sich in einer Ebene mit dem geraden Teil der Stange erstreckt. Der Bogen beginnt an der Stange mit dieser axial fluchtend und endet im wesentlichen parallel zu der Stange. An das Zwischenstück 9 schließt sich ein U-förmiger Ansatz 10 an und zwar derart abgewinkelt, daß er sich in einer zur Ebene des Zwischenstücks 9 etwa senkrechten Ebene erstreckt. Der Abstand zwischen den Schenkeln 10a des Ansatzes ist dabei so bemessen, daß sie den zweiten Trägerarm 1b etwa in leichtem Klemmsitz umfassen können.

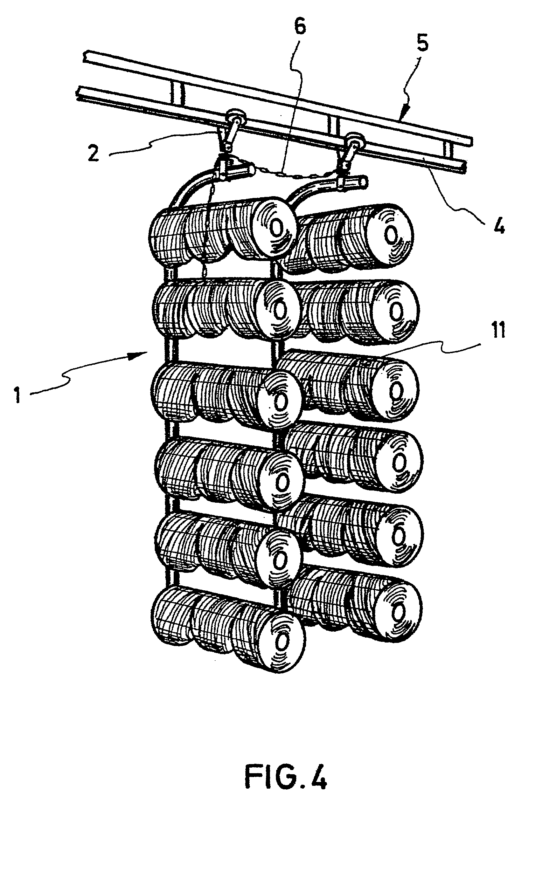

Das Zwischenstück 9 dient im wesentlichen als Handgriff beim Manipulieren mit der Stange 7, insbesondere beim Einsetzen bzw. Herausziehen. Außerdem hängt die Stange in ihrer Ruhestellung am zweiten Trägerarm 1b am Zwischenstück 9, das an dieser Stelle die Bohrung 8 durchsetzt. Zum Verriegeln in Arbeitsstellung wird die in die Bohrung 8 eingeschobene Stange 8 mit Hilfe des als Handgriff dienenden Zwischenstücks 9 um ihre Achse verschwenkt, daß der Ansatz 10 mit seinen Schenkeln 10 dessen zweiten Trägerarm 1b klemmend umgreift, wie es Fig. 2 zeigt. Die Stange sitzt dann sowohl gegen Herausrutschen als auch gegen Verdrehen gesichert fest. Sie ist numehr zum Aufnehmen von Traggut bereit. Traggut kann die verschiedensten Formen und Größen aufweisen. Ein Beispiel zeigt Fig. 4, wo auf alle Stangen eines Trägers 1 jeweils drei Kopse aufgeschoben sind. Außerdem sind dort zwei Träger 1 mit Hilfe der Verbindungskette 6 mit einem gemeinsam verfahrbaren Verbund gekoppelt.

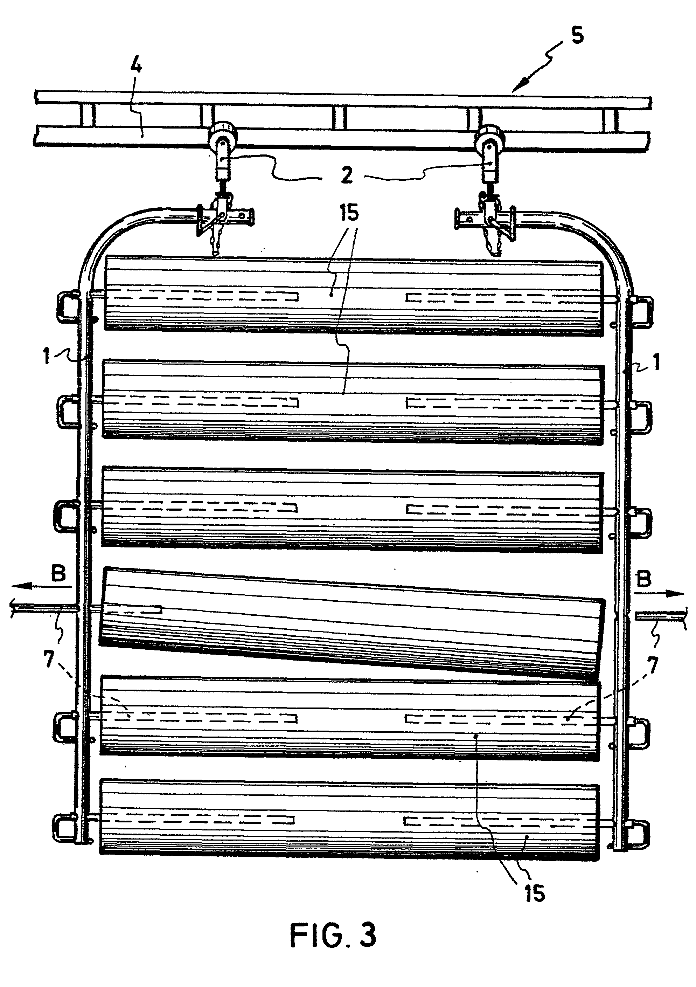

Das Traggut kann jedoch auch aus an Stangen 7 angehängten oder auf ihnen abgestützten Gegenständen bestehen. Der Zwischenraum zwischen den belasteten Stangen 7 ist in der Größe variierbar durch Herausnehmen einzelner Stangen oder deren Verschwenken in eine Ruhestellung. Je nach der Art der Belastung ist eine mehr oder weniger lotrechte Stellung des zweiten Armes 1b des Trägers erwünscht. Im Falle der aufgeschobenen Kopse (Fig. 4) beispielsweise ist es zweckmäßig, wenn der Tragarm 1 auch mit der Belastung so hängt, daß die Stangen mit ihrem freien Ende lecht nach oben zeigen. Das Abrutschen der Kopse wird dadurch verhindert. Für andere Belastungen kann eine möglichst horizontale Ausrichtung der Arme erwünscht sein (Fig. 3). Die Trägerstellung läßt sich dadurch beeinflussen, daß der Tragbügel 2 am ersten Trägerarm 1a in verschiedenen Abständen zu dessen freien Ende halterbar ist. Der erste Arm 1a weist zu diesem Zweck mehrere Bohrungen 12 auf, in denen der Tragbügel 2 mittels einer Steckvorrichtung 13 halterbar ist, die die jeweilige Bohrung 12 und eine diese an beiden Enden übergreifende Gabel 14 besitzt. Die Steckvorrichtung 13 ist in ähnlicher Weise wie die Stange 7 am Träger festsetzbar.

Ein spezielles Anwendungsgebiet der Trageinrichtung zeigt Fig. 3. Dort werden mittels zwei Trägern 1 aus flächigem Material gewickelte Ballen 15 auf dem Schienensystem 5 förderbar galagert. Die Träger 1 nehmen dabei Stellungen ein, in denen die freien Enden ihrer Stangen 7 einander gegenüberliegen. Ein Gelenk im Tragbügel 2 macht dies möglich. In jeden Ballen 15 ragt von beiden Enden her eine Stange 7 in seinen hohlen Kern. Jeder Ballen ist dabei unabhängig von der übrigen Bestückung der Trageinrichtung einzeln einzusetzen oder zu entnehmen. In Fig. 3 ist bei dem dritten Ballen von unten eine Zwischenstellung bei der Entnahme dargestellt: Die in der Zeichnung rechte Stange 7 ist in ihrer Abzugsrichtung B bereits vollständig aus dem Ballen herausgenommen. Die in der Zeichnung linke Stange 7 ist noch nicht völlig abgezogen. Wie der Ballen abgestützt wird, hängt von den jeweiligen Umständen, insbesondere von Größe und Gewicht des Ballens ab. Auf die gleiche Weise kann einer solchen Tragvorrichtung ein Ballen oder eine Rolle in jeden beliebigen Zwischenraum eingesetzt werden.

Die Erfindung ist nicht auf die Ausführungsbeispiele beschränkt. Wesentlich ist, daß jede Stange mit ihrem freien Ende voraus am Träger ansetzbar und in entgegengesetzter Richtung wieder abziehbar ist und daß eine einfache Verriegelungsmöglichkeit besteht. Die Form des betreffenden Stangenendbereiches kann dabei variieren, insbesondere was die Anformung eines als Handgriff dienenden Teils betrifft. Die verstellbare Verbindung zwischen dem Träger und dem Tragbügel ist im Rahmen der Erfindung ebenfalls auf verschiedene Weise möglich, beispielsweise kann sie in Form eines Langloches mit Klemmvorrichtung ausgebildet sein.

**Patentansprüche**

1. Trageinrichtung für ein Hängetransportsystem mit einem winkelförmigen Träger (1), an dessen erstem Arm (1a) ein mittels Laufrollen auf einem Schienensystem abstützbarer Tragbügel (2) gelenkig gelagert ist und an dessen in Gebrauchsstellung zumindest annähernd lotrecht gerichteten zweiten Arm (1b) Stangen (7) mit lotrechtem Zwischenabstand zum direkten oder indirekten Abstützen von Fördergut lösbar angebracht sind, dadurch gekennzeichnet, daß jede Stange (7) eine Bohrung (8) im zweiten Arm (1b) durchsetzt, dort mittels ihres Endbereiches (7a) verriegelbar gehaltert ist und mit diesem voraus durch die sich im wesentlichen parallel zum ersten Arm erstreckende Bohrung (8) abziehbar ist.

2. Trageinrichtung nach Anspruch 1, dadurch gekennzeichnet, daß als Abstützung und Fördermittel für aus flächigem Material gewickelte Ballen (15) oder Rollen zwei Träger (1) einander mit aufeinanderzu gerichteten Stangen (7) derart zugeordnet sind, daß in jeden Ballen (15) von beiden Stirnseiten her jeweils eine Stange (7) stützend eingreift.

3. Trageinrichtung nach Anspruch 1 oder 2, dadurch gekennzeichnet, daß die Stangen (7) am zweiten Arm (1b) in eine etwa vertikale Ruhestellung bringbar sind.

4. Trageinrichtung nach wenigstens einem der Ansprüche 1 bis 3, dadurch gekennzeichnet, daß die Stangen (7) am zweiten Arm (1b) mittels eines diesen klemmend teilweise umfassenden Ansatzes (10) in Tragstellung verriegelbar sind.

5. Trageinrichtung nach Anspruch 4, dadurch gekennzeichnet, daß der Ansatz (10) etwa U-förmig mit einem dem Armdurchmesser in Klemmsitzpassung entsprechenden Schenkelabstand ausgebildet ist.

6. Trageinrichtung nach Anspruch 4 oder 5, dadurch gekennzeichnet, daß zwischen dem Ansatz (10) und dem übrigen Teil der Stange (7) ein etwa bogenförmiges Zwischenstück (9) als Handgriff angeformt ist.

7. Trageinrichtung nach Anspruch 6, dadurch gekennzeichnet, daß sich der Ansatz (10) und das Zwischenstück (9) in zwei zueinander etwa senkrechten Ebenen erstrecken.

8. Trageinrichtung nach einem der Ansprüche 4 bis 7, dadurch gekennzeichnet, daß der Ansatz (10) und/oder das Zwischenstück (9) einen gegenüber der übrigen Stange (7) verringerten Durchmesser aufweisen.

9. Trageinrichtung wenigstens nach Anspruch 1, dadurch gekennzeichnet, daß der Tragbügel (2) am ersten Arm (1a) des Trägers (1) in verschiedenen Abständen zu dessen freiem Ende befestigbar ist.

10. Trageinrichtung nach Anspruch 9, dadurch gekennzeichnet, daß zum Befestigen des Tragbügels (2) mehrere Aufnahmebohrungen (12) am ersten Arm (1a) angebracht sind.

11. Trageinrichtung nach Anspruch 9, dadurch gekennzeichnet, daß der Tragbügel (2) am Träger (1) mittels Klemmhalterungen in einem Langloch gelagert ist.

## Claims

1. Carrying apparatus for a suspension transport system having an angular carrier (1), on the first arm (1a) of which a carrying shackle (2), which can be supported by means of rollers on a rail system, is pivotally mounted and on the second arm (1b) of which, which in the position for use is directed at least approximately upright, rods (7) are detachably fitted at vertical intervals for direct or indirect supporting of conveyed items, characterized in that each rod (7) passes through a bore hole (8) in the second arm (1b), is lockably retained there by means of its end region (7a) and can be pulled out, with the said end region first, through the bore hole (8) extending substantially parallel to the first arm.

2. Carrying apparatus according to Claim 1, characterized in that, as support and means of conveyance for bales (15) or rolls wound from fluffy material, two carriers (1) are assigned to each other, with rods (7) directed towards each other, in such a way that one rod (7) in each case engages in a supporting manner into each bale (15) from both end faces.

3. Carrying apparatus according to Claim 1 or 2, characterized in that the rods (7) on the second arm (1b) can be brought into an approximately vertical rest position.

4. Carrying apparatus according to at least one of Claims 1 to 3, characterized in that the rods (7) on the second arm (1b) can be locked in carrying position by means of an extension piece (10) partially embracing the said arm in a clamping manner.

5. Carrying apparatus according to Claim 4, characterized in that the extension piece (10) is designed approximately U-shaped with a distance between its members corresponding to the arm diameter in clamped fit.

6. Carrying apparatus according to Claim 4 or 5, characterized in that an approximately bow-shaped intermediate piece (9) is integrally attached between the extension piece (10) and the remaining part of the rod (7) as a handle.

7. Carrying apparatus according to Claim 6, characterized in that the extension piece (10) and the intermediate piece (9) extend in two planes approximately perpendicular to each other.

8. Carrying apparatus according to one of Claims 4 to 7, characterized in that the extension piece (10) and/or the intermediate piece (9) have a diameter which is reduced with respect to the remining rod (7).

9. Carrying apparatus at least according to Claim 1, characterized in that the carrying shackle (2) on the first arm (1a) of the carrier (1) can be fixed at various distances from the free end of the latter.

10. Carrying apparatus according to Claim 9, characterized in that a plurality of receiving bore holes (12) are provided on the first arm (1a) for fixing the carrying shackle (2).

11. Carrying apparatus according to Claim 9, characterized in that the carrying shackle (2) is mounted on the carrier (1) by means of clamping holders in a slot.

## Revendications

1. Dispositif de porte-charge pour un transporteur aérien comportant un porte-charge (1) en forme d'équerre, sur le premier bras (1a) duquel porte, avec articulation, un étrier de suspension (2) qui peut s'appuyer au moyen de galets de roulement sur un système de rails, et sur le second bras (1b), dirigé au moins approximativement verticalement en position de service, duquel sont rapportés, de façon amovible, à un certain intervalle vertical, des barreaux (7) pour servir de supports directs ou indirects à la marchandise à transporter, caractérisé en ce que chaque barreau (7) passe dans un perçage (8) prévu dans le second bras (1b), y est maintenu, verrouillé, par sa zone d'extrémité (7a) et peut s'extraire, cette zone d'extrémité en avant, par le perçage (8) qui s'étend sensiblement parallèlement au premier bras.

2. Dispositif de porte-charge selon la revendication 1, caractérisé en ce que comme supports et moyens de transport pour des rouleaux (15) sur lesquels est enroulé un matériau plat, deux porte-charges (1) sont disposés l'un près de l'autre avec des barreaux (7) dirigés les uns vers les autres de façon telle q'un barreau (7) pénétre, en le supportant, dans chaque rouleau (15), respectivement par les deux faces frontales.

3. Dispositif de porte-charge selon la revendication 1 ou 2, caractérisé en ce que l'on a amené les barreaux (7) sur le second bras (1b) en une position de repos à peu près verticale.

4. Dispositif de porte-charge selon au moins l'une des revendications 1 à 3, caractérisé en ce que l'on peut verrouiller les barreaux (7) sur le second bras (1b), en position de support, au moyen d'un embout (10) qui les entoure au moins partiellement en les serrant.

5. Dispositif de porte-charge selon la revendication 4, caractérisé en ce que l'embout (10) a à peu près la forme d'un U avec un écartement des ailes correspondant au diamètre de bras à ajustement serré.

6. Dispositif de porte-charge selon la revendication 4 ou 5, caractérisé en ce qu'entre l'embout (10) et la portion restante du barreau (7), une pièce intermédiaire (9) en forme d'arc est formée pour servir de poignée.

7. Dispositif de porte-charge selon la revendication 6, caractérisé en ce que l'embout (10) et la pièce intermédiaire (9) s'étendent dans deux plans à peu près perpendiculaires l'un à l'autre.

8. Dispositif de porte-charge selon une des revendications 4 à 7, caractérisé en ce que l'embout (10) et/ou la pièce intermédiaire (9) présentent un diamètre réduit par rapport au reste du barreau (7).

9. Dispositif de porte-charge selon au moins la revendication 1, caractérisé en ce que l'étrier de suspension (2) peut se fixer au premier bras (1a) du porte-charge (1), à différentes distances de l'extrémité libre de ce porte-charge.

10. Dispositif de porte-charge selon la revendication 9, caractérisé en ce que plusieurs perçages de reprise (12) sont prévus sur le premier bras (1a) pour la fixation de l'étrier de suspension (2).

11. Dispositif de porte-charge selon la revendication 9, caractérisé en ce que l'étrier de suspension (2) porte sur le porte-charge (1) au moyen de fixations dans une lumière.

FIG.1

FIG. 2

FIG. 3

FIG. 4